# EUROPÄISCHE PATENTANMELDUNG

(11) **EP 2 181 664 A1**
(43) Veröffentlichungstag der Anmeldung: **05.05.2010**
(21) Anmeldenummer: 09153042.8
(22) Anmeldetag: 17.02.2009
(51) Int. Cl.: A61C 5/10, A61C 13/00

(54) **Verfahren zur Herstellung einer dentalen Funktionsprothetik**

(30) Priorität: 31.10.2008 DE 102008037512; 17.12.2008 DE 102008055534
(71) Anmelder: DeguDent GmbH, 63457 Hanau (DE)
(72) Erfinder: Meier, Hans-Ulrich, 46149 Oberhausen (DE)
(74) Vertreter: Stoffregen, Hans-Herbert

(57) **Zusammenfassung**

Die Erfindung bezieht sich auf ein Verfahren zur Herstellung einer Funktionsprothetik zur Versorgung eines Bereichs eines Kiefers umfassend die Verfahrensschritte Abdrucknahme des mit der Funktionsprothetik zu versehenden Kieferbereichs, Herstellen einer Vorkonstruktion und gegebenenfalls Überprüfen dieser in einem Artikulator und Herstellen der Funktionsprothetik auf der Basis der gegebenenfalls bearbeiteten Vorkonstruktion. Um eine Funktionsprothetik unter Einbeziehung einer Vorkonstruktion herzustellen, bei dem eine Funktionsanalyse des stomatognathen Systems berücksichtigt werden kann, wird vorgeschlagen, dass die Vorkonstruktion aus einem zeichnungsfähigen Material einer Härte H hergestellt wird, die 90 % bis 100 % der Härte von zumindest einem natürlichen oder sanierten Zahn eines Antagonisten des Kieferbereichs entspricht, dass die sodann in den Kieferbereich eingegliederte Vorkonstruktion über eine Tragedauer von in etwa 5 Tagen bis 30 Tagen in dem Kieferbereich verbleibt, anschließend die Vorkonstruktion entnommen und sodann die Funktionsprothese unter Berücksichtigung von während des Tragens der Vorkonstruktion aufgetretener Veränderung an dieser hergestellt wird.

## Beschreibung

Die Erfindung bezieht sich auf ein Verfahren zur Herstellung einer Funktionsprothetik zur Versorgung eines Bereichs eines Kiefers umfassend die Verfahrensschritte
- Abdrucknahme des mit der Funktionsprothetik zu versehenden Kieferbereichs,
- Herstellen einer Vorkonstruktion und gegebenenfalls Überprüfen dieser in einem Artikulator und
- Herstellen der Funktionsprothetik auf der Basis der gegebenenfalls bearbeiteten Vorkonstruktion.

Die Funktionsdiagnostik zur fünktionsgeführten Prothetik wird in der Zahnmedizin häufig vernachlässigt, gleichwenn diese besonderer Beachtung bedürfte. Bekanntlich ist die Position der Kiefer zueinander im Laufe eines Lebens durch unterschiedliche Einflüsse einer starken Veränderung ausgesetzt. So verlieren die Kiefer ihre vertikale, horizontale und sagitale Dimension zueinander dann, wenn z.B. ein Patient zahnlos geworden ist. Gleichzeitig geht die optimale Position des Gelenkköpfchens des Unterkiefers der Gelenkpfanne verloren.

Als Folge können Gelenkknacken, Knirschen, Migräne oder sogar Tinnitus auftreten. Entsprechende Veränderungen können sich jedoch bereits bei einem Verlust eines einzigen Seitenzahnes oder sogar bei untherapierten Zahnfehlstellungen bemerkbar machen, die die Kiefer in eine sogenannte Zwangsbisslage bringen können. Auch Füllungstherapien und der natürliche Abschliff der Zähne können zu Veränderungen und den zuvor aufgezeigten Folgen führen.

Zur Herstellung eines Zahnersatzes erfolgt nach dem Stand der Technik ein Abformen des relevanten Kieferbereichs durch den Behandler. Sodann wird ein Modell durch Ausguss des Abdrucks hergestellt. Die Modelle werden einartikuliert, um sodann durch Modellierung oder CAD eine Vorkonstruktion zur Verfügung zu stellen. Diese wird sodann im Artikulator überprüft und der jeweiligen Bisssituation zumindest mittelwertig angepasst. Aufgrund der so hergestellten und überprüften Vorkonstruktion wird sodann der Zahnersatz (die Prothetik) durch z. B. Gießen, Fräsen, Pressen hergestellt. Anschließend erfolgt ein Einschleifen im Mittelwert und in Vivo. Nach gegebenenfalls erforderlichen Nacharbeiten folgt sodann eine definitive Eingliederung.

Nach dem Stand der Technik versucht man bereits mit mehr oder weniger großem Erfolg bei der Herstellung von Zahnersatz dem stomatognathen System Rechnung zu tragen, d.h. dem Funktionssystem des Kauorgans, das Schädel, Muskel und die körperliche Anatomie umfasst. Allerdings erfolgen häufig nur Momentanaufnahmen des Funktionsablaufs, d. h. z. B. der Schlussbiss wird dokumentiert, ohne die Bewegung der Kiefer zu berücksichtigen (System Ivoclar®/ Vivadent®).

Ein unter der Bezeichnung "Arcus®" genutztes System berücksichtigt Kieferbewegungen und Muskelbewegungen, die über von Gesichtsbögen ausgehenden Sensoren ermittelt werden. Auf der Basis der so ermittelten Werte wird sodann ein Zahnersatz hergestellt. Folglich werden Daten berücksichtigt, die außerhalb des Mundes und nicht im Mundfunktionsort/ -raum ermittelt werden.

Ein sogenanntes DIR®-System nutzt eine direkte, interne Methode der Kieferfunktionsdiagnostik und Kiefergelenksfunktionsdiagnostik mittels Bewegungsregistrierung, Übertragung und Umwandlung der Signale in ein rechnergestütztes System. Die Werte werden auf einen Artikulator übertragen, um sodann einen Zahnersatz herzustellen.

Nach dem System zebris JMA werden Muskelbewegungen mittels Hautoberflächenelektroden berücksichtigt, um einen Zahnersatz herzustellen.

Bei einem anderen System ("FGP-Technik") ist es zur Einbeziehung einer Funktionsdiagnostik erforderlich, das ein natürlicher oder sanierter Antagonistenbereich, eine gesicherte Front-Eckzahnführung, ein Kiefergelenk ohne wesentliche pathologische Anamnese, nicht vorhandene Balancekontakte und eine gesicherte habituelle Zentrik vorliegen, also Voraussetzungen, die häufig nicht erfüllt sind.

Der vorliegenden Erfindung liegt die Aufgabe zugrunde, ein Verfahren der eingangs genannten Art so weiterzubilden, dass eine Funktionsprothetik unter Einbeziehung einer Vorkonstruktion hergestellt wird, bei dem eine Funktionsanalyse des stomatognathen Systems berücksichtigt wird.

Zur Lösung der Aufgabe sieht die Erfindung im Wesentlichen vor, dass die Vorkonstruktion aus einem zeichnungsfähigen Material einer Härte H hergestellt wird, die 90 % bis 100 % der Härte von zumindest einem natürliche oder sanierten Zahn eines Antagonisten des Kieferbereichs entspricht, dass die sodann in den Kieferbereich eingegliederte Vorkonstruktion über eine Tragedauer von in etwa 5 Tagen bis 30 Tagen in dem Kieferbereich verbleibt, anschließend die Vorkonstruktion entnommen und sodann die Funktionsprothese unter Berücksichtigung von während des Tragens der Vorkonstruktion aufgetretener Veränderung an dieser hergestellt wird.

Erfindungsgemäß werden die Veränderungen an der Vorkonstruktion, also an der provisorischen Versorgung gegenüber dem Ausgangszustand vor der Eingliederung in den Kiefer zur Herstellung einer verbesserten Konstruktion der endgültigen Restauration berücksichtigt.

Die nach der Tragedauer zwischen 5 und 30 Tagen, insbesondere zwischen 15 und 20 Tagen entnommene Vorkonstruktion wird sodann vermessen wie gescannt, so dass sodann eine Funktionsprothetik zur Verfügung gestellt wird, bei der der Funktionsanalyse des stomatognathen Systems Rechnung getragen wird.

Erfindungsgemäß wird ein biognates Funktionsanalysesystem zur Verfügung gestellt, bei dem eine Vorkonstruktion, die zeichnungsfähig und anpassabrasiv ist, über einen vorgegebenen Zeitraum in einem Patientenmund eingegliedert wird. Dies bedeutet, dass die Vorkonstruktion - auch als Provisorium zu bezeichnen - während der und durch die Nutzung, gekennzeichnet wird. Somit wird das Funktionssystem erfasst. Dabei besteht erfindungsgemäß die Möglichkeit, dass während des Tragens aufgrund bereits aufgetretener Veränderungen bereits eine Nachbearbeitung der Vorkonstruktion erfolgt, um dem Funktionssystem zu genügen.

Die Vorkonstruktion kann aus zumindest einem Material aus der Gruppe Kunststoff, Metall, Keramik, synthetisches Glas, faserverstärkte Materialien, Epoxidharz oder sonstige für provisorischen Zahnersatz geeignete Materialien bestehen. Dabei sollte die Härte der Vorkonstruktion ähnlich der natürlichen Zahnsubstanz oder geringer als die des Antagonisten sein.

Nach der Entnahme der Vorkonstruktion, also nach der Tragezeit zwischen 5 und 30 Tagen, insbesondere 15 und 20 Tagen wird sodann die endgültige Prothetik hergestellt. Dies kann nach bekannten Verfahren wie CAD-, CAM-, CIM- gestützte Verfahren erfolgen.

Zur Herstellung der Vorkonstruktion wird z.B. die natürliche Zahnsituation durch vorherige Abdrucknahme oder durch Scannen der bisherigen Situation im Patientenmund oder an einem entsprechenden Modell erfasst. Dabei kann ein intraorales Scannen oder ein Scannen eines Abdrucks bzw. aus einem Abdruck hergestellten Modells erfolgen. Die Erfassung der natürlichen Zahnsituation schließt dabei die Möglichkeit ein, dass auch eine Erfassung vor der Präparation erfolgt.

Die so hergestellte Vorkonstruktion wird sodann üblicherweise mittels eines Artikulators zumindest mittelwertig angepasst. Dies kann auch virtuell erfolgen, d.h. vor der physischen Herstellung der Vorkonstruktion werden die ermittelten Daten für die Vorkonstruktion unter Berücksichtigung eines virtuellen Artikulators eingepasst.

Zur Herstellung der Funktionsprothetik werden die Funktionszeichnungsdaten der dem Patienten entnommen Vorkonstruktion mit denen des Kieferbereichs, in den die Prothetik eingegliedert werden soll, verknüpft, um sodann die Funktionsprothetik herzustellen, wobei erneut eine Überprüfung von Funktionsparameter mittels eines Artikulators - gegebenenfalls wie zuvor virtuell - erfolgen sollte. Die Arbeiten selbst werden dabei softwareunterstützt durchgeführt. Aufgrund der sodann zur Verfügung stehenden Daten wird nach den bekannten Verfahren wie CAM und CIM die definitive , also endgültige prothetische Versorgung aus Metall, Vollkeramik, Kunststoff, glasfaserverstärkten Materialien oder anderen für die gewählte Produktionstechnik zum Einsatz gelangenden Materialien hergestellt.

Unabhängig hiervon sollte ergänzend eine Referenzierung der Vorkonstruktion zu dem Kieferbereich, in den diese eingegliedert wird, erfolgen, um sodann eine eindeutige Eingliederung der Funktionsprothetik sicherzustellen. Neben intraoralen Referenzierungsmöglichkeiten, also solchen die im Mund selbst erfolgen, die zum Matchen der beim Scannen ermittelten Daten genutzt werden, kann auch ein extraorales Referenzieren erfolgen, also am Modell.

Auch zeichnet sich die Erfindung insbesondere dadurch aus, dass während des Tragens der Vorkonstruktion Korrekturen an dieser erfolgen können. Dies ist insbesondere hinsichtlich Bisskorrekturen oder Bissanhebungen sinnvoll. Insbesondere kann eine Überprüfung auftretender Belastung erfolgen, um beim Feststellen von Anomalien die Vorkonstruktion zur Veränderung der Belastung zu bearbeiten.

Unter die erfindungsgemäße Lehre fällt auch die Herstellung einer Aufbissschiene. Aufbissschienen sind dabei Einsätze wie Silikonbalken, um Bissprobleme zu erfassen.

Vorzugsweise ist jedoch unter dem Begriff Funktionsprothetik ein festsitzender oder herausnehmbarer Zahnersatz zu verstehen.

Die erfindungsgemäße Lehre zur Herstellung einer Funktionsprothetik berücksichtigt das stomatognathe System des Patienten. Eine biodynamische Funktionsanalyse wird durchgeführt. Okklusions- und Incisalfunktionen, Beweglichkeit des Paradontium, Knochendeformierung des Unterkiefers, paradontale Lockerungsgrade, Gegenkieferposition, muskuläre Einflüsse werden aufgrund der erfindungsgemäßen Lehre erfasst und alle Kausystem bezogenen Daten werden berücksichtigt. Durch das Tragen der Vorkonstruktion zeichnet sich der Patient seine eigene Okklusion. Erfindungsgemäß wird zur Funktionsanalyse keine Momentaufnahme durchgeführt. Vielmehr erfolgt eine Langzeitfunktionsanalyse im Mund selbst.

Auch werden schlechte Präparationen erfindungsgemäß bei der Herstellung der Funktionsprothetik erfasst.

Die definitive Funktionsprothetik berücksichtigt folglich alle diagnostisch relevanten Informationen.

Weitere Einzelheiten, Vorteile und Merkmale der Erfindung ergeben sich nicht nur aus den Ansprüchen, den diesen zu entnehmenden Merkmalen, sondern auch aus der nachfolgenden Beschreibung eines Ausführungsbeispiels.

Es zeigen:
- Fig. 1: ein Fließbild,
- Fig. 2: eine Draufsicht auf eine Bezahnung,
- Fig. 3: eine Seitenansicht eines Kieferbereichs in Prinzipdarstellung,
- Fig. 4: ein Abdruck,
- Fig. 5: ein Modell des Abdrucks mit Funktionsprovisorium,
- Fig. 6: eine Prinzipdarstellung eines Mundraums mit mit einem Funktionsprovisorium versehenen Zähnen und
- Fig. 7: eine Prinzipdarstellung eines fertig eingesetzten Zahnersatzes.

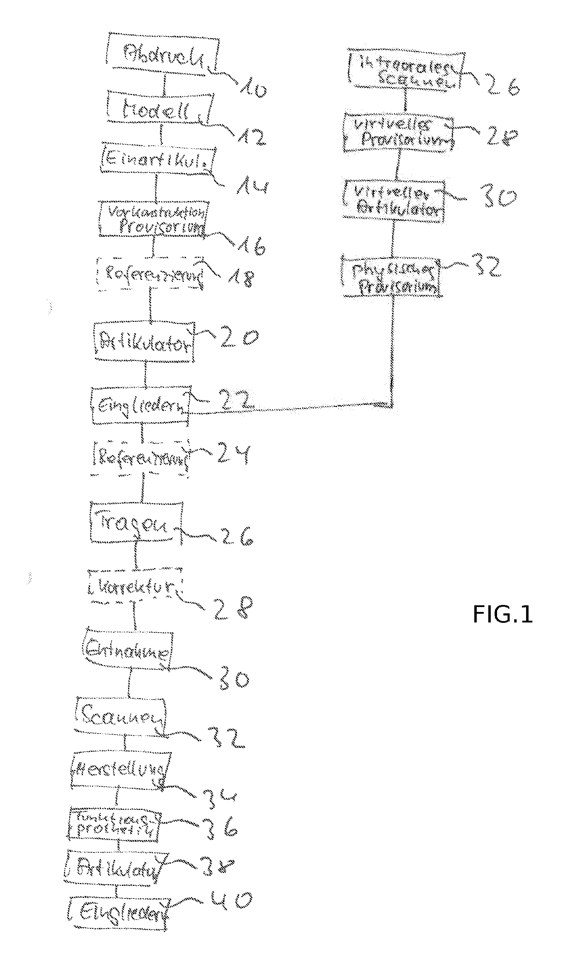

Der Fig. 1 ist ein Fließbild zu entnehmen, in dem das erfindungsgemäße Verfahren zur Herstellung einer Funktionsprothetik verdeutlicht wird. Eine Krone wird dabei als Funktionsprothetik rein beispielhaft verwendet, ohne dass hierdurch die erfindungsgemäße Lehre eingeschränkt wird.

In der Fig. 1 erfolgt nach dem linken Zweig des Fließschemas zunächst eine Abdrucknahme 10, um ein Modell herzustellen (Verfahrensschritt 12). Üblicherweise werden sodann die Modelle einartikuliert (Verfahrensschritt 14), um anschließend die Vorkonstruktion durch Modellierung oder CAD Konstruktion herzustellen (Verfahrensschritt 16).

Die Vorkonstruktion wird sodann in einem Artikulator überprüft und den jeweiligen Bisssituationen mittelwertig angepasst (Verfahrensschritt 20) anschließend erfolgt ein Eingliedern der Krone, d.h. des Provisoriums in den Patientenmund (Verfahrensschritt 22).

Die Krone selbst sollte entweder in Bezug auf das Modell oder nach Eingliedern referenziert werden (Verfahrensschritt 18 bzw. 24).

Alternativ und entsprechend dem rechten Zweig des Fließschemas kann ein intraorales Scannen durchgeführt werden (Verfahrensschritt 26), um sodann virtuell ein Provisorium 28 in bekannter Weise herzustellen, dass in einem virtuellen Artikulator überprüft wird (Verfahrensschritt 30). Auf der Basis der so zur Verfügung stehenden Daten wird sodann das Provisorium hergestellt (Verfahrensschritt 32).

Nach dem Eingliedern des Provisoriums wird dieses über einen Zeitraum zwischen 5 und 30 Tagen, insbesondere 15 bis 20 Tage getragen (Verfahrensschritt 26). Während des Tragens können eine Überprüfung des Provisoriums und gegebenenfalls erforderliche Korrekturen erfolgen (Verfahrensschritt 28), z. B. dann, wenn sich herausstellt, dass z. B. in bestimmten Bereichen des Provisoriums unzulässige oder ungleichmäßige Belastungen auftreten, um sodann das Provisorium zur Veränderung des Bisses zu bearbeiten.

Anschließend wird nach der zuvor festgelegten Tragedauer das Provisorium entnommen (Verfahrensschritt 30) und gescannt (Verfahrensschritt 32), um z. B. nach CAM- bzw. CIM-Verfahren (Verfahrensschritt 34) die Krone herzustellen (Verfahrensschritt 36). Diese wird sodann üblicherweise in das - ggf. virtuelle - Modell eingesetzt und in einem Artikulator überprüft (Verfahrensschritt 38), um sodann die gegebenenfalls korrigierte Krone einzugliedern (Verfahrensschritt 40).

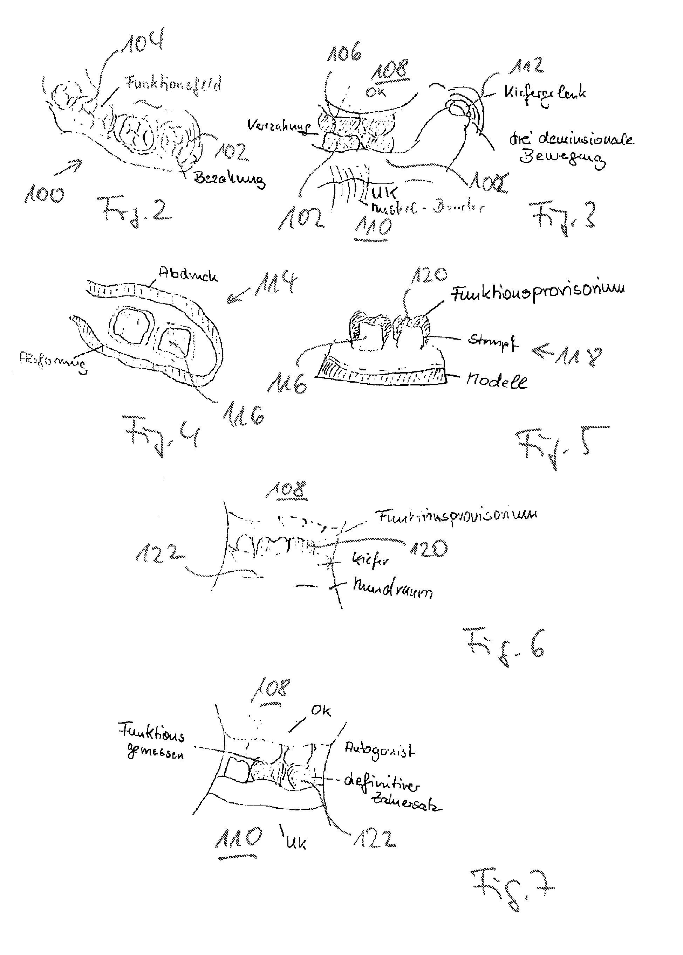

Das erfindungsgemäße Verfahren soll auch anhand der Fig. 2 bis 7 näher erläutert werden.

Zur Herstellung einer erfindungsgemäßen Funktionsprothetik wird die funktionelle Erfassung der Bewegungsabläufe der Kiefer und deren Bezahnung zueinander berücksichtigt. Hierdurch wird sichergestellt, dass die wesentlichen Faktoren erfasst werden, die für einen störungsfreien Ablauf in den Kaubewegungen Sorge tragen.

In Fig. 2 ist in Draufsicht ein Ausschnitt eines Kieferbereichs 100 mit einer Bezahnung 112 dargestellt, die ihrerseits Funktionsfelder 104 aufweist. Ein entsprechender Bereich ist in Fig. 3 in Seitenansicht dargestellt, um die Verzahnung zwischen den der Fig. 2 zu entnehmenden Zähne 102 und den Antagonisten 106 zu verdeutlichen, die sich im Oberkiefer 108 befinden. Oberkiefer 108 und Unterkiefer 110 sind über ein Kiefergelenk 112 verbunden, über das eine dreidimensionale Bewegung ermöglicht wird.

Von dem Kieferbereich 100 erfolgt eine Abformung, um einen Abdruck 114 der Bezahnung 112 zu gewinnen, die Stümpfe 116 umfasst. Von dem Abdruck 114 wird ein Modell 118 angefertigt, um eine provisorische Versorgung, ein sogenanntes Funktionsprovisorium herzustellen. Dieses ist mit dem Bezugszeichen 120 gekennzeichnet.

Ist anhand der Fig. 4 und 5 das manuelle Abformen und Herstellen eines Modells dargestellt, so kann die Bezahnung des Kieferbereichs 100 auch gescannt werden, um sodann CAD-softwaregestützt eine Rekonstruktion, also das Funktionsprovisorium 120 herzustellen.

Das Funktionsprovisorium 120, das in Fig. 6 vom Mundraum 122 aus betrachtet ist, besteht aus einem Material, das eine geringere Härte als die natürlichen Zähne aufweist. Insbesondere beläuft sich die Härte auf 90 % bis 100 % der Härte des bzw. der zugeordneten Antagonisten, sei dies ein natürlicher Zahn, sei es ein sanierter Zahn. Als Materialien kommen Kohlenstoffe, Gläser, Metalle, faserverstärkte Materialien, Epoxidharze oder sonstige für den Zahnersatz geeignete Materialien in Frage.

Das in Fig. 6 dargestellte eingegliederte Funktionsprovisorium wird sodann über einen Zeitraum von 5 - 30 Tagen, insbesondere zwischen 15 und 20 Tagen getragen. Während des Tragens kann eine Überprüfung erfolgen, um eventuelle Korrekturen am Funktionsprovisorium 120 vorzunehmen. Durch das Tragen und der dadurch erfolgten Veränderungen an dem Funktionsprovisorium 120 werden alle relevanten Funktionsabläufe des stromatognathen Systems erfasst. Diese überaus genauen Messergebnisse werden mit Hilfe von Referenzierungen in genaue Rekonstruktionen des Funktionsprovisoriums durch z. B. CAD oder sonstige herkömmliche Zahnersatzherstellverfahren in einen definitiven Zahnersatz reproduziert. Dies umfasst alle bekannten Herstellungs- und Fertigungsmethoden. Nach einer weiteren Überprüfung in einem Artikulator oder in einem auf das erfindungsgemäße Verfahren abgestimmten externen Messüberprüfungssystem wird sodann der Zahnersatz 122 eingegliedert, wie sich dies aus der Fig. 7 rein prinzipiell ergibt.

Das erfindungsgemäße Verfahren lässt dem Grunde nach keine Messeinflüsse außer Acht, da die Funktionsmessung an dem Ort erfolgt, an dem die tatsächlichen Funktionen stattfinden und diese somit erfasst werden können. Die in diesem Bereich vorhandenen relevanten Eigenschaften werden sicher erfasst.

## Patentansprüche

1. Verfahren zur Herstellung einer Funktionsprothetik zum Versorgen eines Bereichs eines Kiefers umfassend die Verfahrensschritte
• Abdrucknahme des mit der Funktionsprothetik zu versehenden Kieferbereichs,
• Herstellen einer Vorkonstruktion und gegebenenfalls Überprüfen dieser in einem Artikulator und
• Herstellen der Funktionsprothetik auf der Basis der gegebenenfalls bearbeiteten Vorkonstruktion,
**dadurch gekennzeichnet,**
**dass** die Vorkonstruktion aus einem zeichnungsfähigen Material einer Härte H hergestellt wird, die 90 % bis 100 % der Härte von zumindest einem natürlichen oder sanierten Zahn eines Antagonisten des Kieferbereichs entspricht, dass die sodann in den Kieferbereich eingegliederte Vorkonstruktion in den Kieferbereich über eine Tragedauer zwischen in etwa 5 Tagen bis 30 Tagen verbleibt, anschließend die Vorkonstruktion entnommen und die Funktionsprothetik unter Berücksichtigung von während des Tragens aufgetretenen Veränderungen in der Vorkonstruktion hergestellt wird.

2. Verfahren nach Anspruch 1,
**dadurch gekennzeichnet,**
**dass** während der Tragedauer eine Überprüfung der Vorkonstruktion und in Abhängigkeit von erfolgter Veränderung der Vorkonstruktion diese bearbeitet wird.

3. Verfahren nach Anspruch 1 oder 2,
**dadurch gekennzeichnet,**
**dass** in Abhängigkeit von erfolgter Veränderung der Vorkonstruktion diese zur Korrektur wie Anheben des Funktionsbisses und der Position der Kiefer zueinander Kiefers verändert wird.

4. Verfahren nach zumindest einem der vorhergehenden Ansprüche,
**dadurch gekennzeichnet,**
**dass** während des Tragens der Vorkonstruktion auftretende Belastung überprüft und bei Feststellen von Anomalien die Vorkonstruktion zur Veränderung der Belastung bearbeitet wird.

5. Verfahren nach zumindest einem der vorhergehenden Ansprüche,
**dadurch gekennzeichnet,**
**dass** die Vorkonstruktion in Bezug auf den Kiefer referenziert wird.

6. Verfahren nach zumindest einem der vorhergehenden Ansprüche,
**dadurch gekennzeichnet,**
**dass** die Referenzierung extraoral oder intraoral durchgeführt wird.

7. Verfahren nach zumindest einem der vorhergehenden Ansprüche,
**dadurch gekennzeichnet,**
**dass** die Abdrucknahme physisch durchgeführt wird.

8. Verfahren nach zumindest einem der vorhergehenden Ansprüche,
**dadurch gekennzeichnet,**
**dass** die Abdrucknahme durch intraorales Scannen oder Scannen eines physischen Abdrucks des Kieferbereichs durchgeführt wird.

9. Verfahren nach zumindest einem der vorhergehenden Ansprüche,
**dadurch gekennzeichnet,**
**dass** die Vorkonstruktion durch manuelle Modellation und/ oder CAD- oder CIM-Verfahren hergestellt wird.

10. Verfahren nach zumindest einem der vorhergehenden Ansprüche,
**dadurch gekennzeichnet,**
**dass** die Vorkonstruktion in einem Artikulator mittelwertig angepasst wird.

11. Verfahren nach zumindest einem der vorhergehenden Ansprüche,
**dadurch gekennzeichnet,**
**dass** die Funktionsprothetik ein festsitzender oder herausnehmbarer Zahnersatz oder eine Aufbissschiene ist.

12. Verfahren nach zumindest einem der vorhergehenden Ansprüche,
**dadurch gekennzeichnet,**
**dass** als Material für die Vorkonstruktion zumindest ein Material aus der Gruppe Kunststoff, Metall, weicheres synthetisches Glas, Keramik, Epoxidharz, faserverstärktes Material verwendet wird.

13. Verfahren nach zumindest einem der vorhergehenden Ansprüche,
**dadurch gekennzeichnet,**
**dass** als Material für die Funktionsprothetik zumindest ein körperverträgliches Material aus der Gruppe Metall, Keramik, Kunststoff, faserverstärktes Material verwendet wird.
